(19) **Europäisches Patentamt European Patent Office Office européen des brevets**

(11) **EP 2 008 410 B1**

(12) **FASCICULE DE BREVET EUROPEEN**

(45) Date de publication et mention de la délivrance du brevet:
**01.12.2010 Bulletin 2010/48**

(21) Numéro de dépôt: **07731836.8**

(22) Date de dépôt: **28.03.2007**

(51) Int Cl.:
***H04W 40/00*** (2009.01)

(86) Numéro de dépôt international:
**PCT/FR2007/051028**

(87) Numéro de publication internationale:
**WO 2007/113437 (11.10.2007 Gazette 2007/41)**

(54) **PROCEDE D'IDENTIFICATION D'AU MOINS UNE ROUTE SATISFAISANT AU MOINS UNE CONTRAINTE ENTRE UN NOEUD SOURCE ET UN NOEUD DESTINATAIRE DANS UN RESEAU DE TELECOMMUNICATIONS**

VERFAHREN ZUM IDENTIFIZIEREN MINDESTENS EINER MINDESTENS EINE NEBENBEDINGUNG ERFÜLLENDEN ROUTE ZWISCHEN EINEM QUELLENKNOTEN UND EINEM ZIELKNOTEN IN EINEM TELEKOMMUNIKATIONSNETZ

METHOD OF IDENTIFYING AT LEAST ONE ROUTE SATISFYING AT LEAST ONE CONSTRAINT BETWEEN A SOURCE NODE AND A DESTINATION NODE IN A TELECOMMUNICATIONS NETWORK

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **03.04.2006 FR 0651163**

(43) Date de publication de la demande:
**31.12.2008 Bulletin 2009/01**

(73) Titulaire: **FRANCE TELECOM**
**75015 Paris (FR)**

(72) Inventeurs:
• **MEDDOUR, Djamal-Eddine**
**22300 Lannion (FR)**
• **KORTEBI, Riadh**
**22700 PERROS-GUIREC (FR)**
• **GOURHANT, Yvon**
**22300 LANNION (FR)**
• **AGOULMINE, Nazim**
**75013 PARIS (FR)**

(74) Mandataire: **Delumeau, François Guy et al**
**Cabinet Beau de Loménie**
**158, rue de l'Université**
**75340 Paris Cedex 07 (FR)**

(56) Documents cités:
**GB-A- 2 411 549     US-B1- 6 304 556**

• **ABOLHASAN M,WYSOCKI T, DUTKIEWICZ E: "A review of routing protocols for mobile ad hoc networks"[Online] 22 novembre 2004 (2004-11-22), XP002416710 Extrait de l'Internet: URL:http://www.sim.uni-hannover.de/~drozda /adhoc_lecture/abolhasan04.pdf> [extrait le 2007-01-25]**

**Description**

Arrière-plan de l'invention

Le domaine de l'invention est celui du routage dans un réseau de télécommunication.

L'invention s'applique de façon privilégiée, mais non limitative, dans les réseaux de télécommunication de type ad hoc.

De façon connue, ces réseaux sont constitués de noeuds mobiles et/ou fixes ayant la propriété de constituer automatiquement et dynamiquement un réseau capable d'acheminer des paquets d'un noeud quelconque du réseau à un autre dès lors qu'une communication radio peut être établie entre un noeud et ses voisins.

Les paquets sont transmis directement entre le noeud source et le noeud destinataire si ce destinataire est dans la zone de connectivité du noeud source ou via des noeuds intermédiaires voisins assurant le rôle de routeurs si le noeud destinataire est hors de portée d'une source.

Les noeuds sont donc responsables de l'établissement et du maintien de la connectivité du réseau d'une manière continue.

Ceci est réalisé par l'utilisation de protocoles de routage ad hoc.

D'une façon générale, il existe deux grandes familles de protocoles de routage, à savoir les protocoles proactifs et réactifs.

L'invention concerne un protocole hybride, c'est-à-dire faisant l'usage de ces deux techniques.

Dans un protocole de routage proactif, un mécanisme d'échange périodique de messages de contrôle est mis en place afin que chaque noeud puisse construire de manière distribuée la topologie du réseau.

Cela se fait par la diffusion de messages de contrôle ayant pour but d'informer l'ensemble des noeuds de l'évolution de la topologie du réseau. Chaque noeud met périodiquement à jour sa table de routage lors de la réception de ces messages de contrôle.

Ces protocoles de routage proactifs offrent une très bonne visibilité de la topologie du réseau et une disponibilité immédiate des routes.

Dans un protocole de routage proactif, les routes sont généralement calculées selon un algorithme du plus court chemin utilisant une métrique définie à partir de contraintes prédéterminées, par exemple nombre de sauts, contrainte de qualité de service (QOS pour Quality Of Service en anglais),...

En conséquence, ces protocoles de routage proactifs sont mal adaptés lorsque ces contraintes varient, puisque les routes pré-calculées l'ont été sur la base d'hypothèses devenues erronées.

Contrairement à une approche proactive, dans un protocole de routage réactif un noeud source ne calcule les routes vers un noeud destinataire qu'à la demande d'une application qui souhaite envoyer un paquet à ce noeud destinataire.

Ce calcul de route se fait par la diffusion d'une requête dans tout le réseau. La réponse à cette requête de diffusion permet à la source d'obtenir les informations topologiques relatives à cette route.

Dans un protocole réactif, les routes sont ainsi créées à la demande. De ce fait, ces protocoles de routage sont bien adaptés aux réseaux dans lesquels les contraintes sont susceptibles de varier dans le temps.

En revanche, les protocoles réactifs présentent un inconvénient majeur en ce qu'ils introduisent un coût élevé d'inondation du réseau lors de la découverte des routes, et ce contrairement aux protocoles de routage proactifs qui eux maintiennent une visibilité sur la topologie du réseau.

US-B1-6 304 556 décrit un procédé de détermination d'une route utilisant un protocole proactif dans le cas ou la destination fait partie de l'environnement proche du noeud source. Dans le cas contraire, la route est déterminée en utilisant un protocole réactif.

Objet et résumé de l'invention

D'une façon générale, l'invention vise un nouveau procédé de d'identification de routes, adapté aux réseaux dans lesquels les contraintes prises en compte pour le calcul des routes sont susceptibles de varier dans le temps.

Plus précisément, l'invention concerne un procédé d'identification d'au moins une route satisfaisant au moins une première contrainte entre un noeud source et un noeud destinataire dans un réseau de télécommunications dans lequel une table de routage et une table de topologie sont établies par la mise en oeuvre d'un protocole proactif ($P_{RP}$).

Ce procédé comporte une étape de test d'une route déterminée en utilisant la table de routage établie par la mise en oeuvre d'un protocole de routage proactif.

Ce procédé comporte, en cas d'échec de l'étape de test :

- une étape de sélection d'un nombre prédéterminé de routes potentielles à partir de la table de topologie ; et
- une étape de recherche d'au moins une route parmi les routes potentielles satisfaisant ladite au moins une première contrainte.

Corrélativement, l'invention concerne un dispositif d'identification d'au moins une route satisfaisant au moins une première contrainte entre un noeud source et un noeud destinataire dans un réseau de télécommunications.

Ce dispositif comporte :

- des moyens de mise en oeuvre d'un protocole de routage proactif apte à établir une table de routage et une table de topologie ;
- des moyens de test, agencés pour vérifier si une route entre le noeud source et le noeud destinataire déterminée à partir de la table de routage vérifie ladite au moins une première contrainte ;
- des moyens de sélection d'un nombre prédéterminé de routes potentielles à partir de ladite table de topologie ; et
- des moyens de recherche, agencés pour rechercher au moins une route parmi lesdites routes potentielles satisfaisant ladite au moins une première contrainte.

D'une façon générale, l'invention vise ainsi un procédé et un dispositif mettant en oeuvre un protocole réactif pour la recherche de nouvelles routes lorsque des routes précédemment établies par un protocole proactif ne permettent pas d'identifier une route satisfaisant au moins une contrainte entre un noeud source et un noeud destinataire.

Autrement dit, on cherche, a priori, les routes parmi celles qui sont identifiées par le protocole proactif, de façon à ne pas diffuser de requêtes inutiles.

Mais lorsque les routes identifiées par ce protocole proactif ne permettent pas de satisfaire au moins une contrainte, on déclenche un protocole réactif pour identifier de nouvelles routes.

Fort avantageusement, la recherche des nouvelles routes se fait en utilisant une table de topologie établie par le protocole proactif, de sorte que les requêtes de diffusion n'inondent pas le réseau, mais parcourent uniquement un nombre limité de routes potentielles.

Dans un mode particulier de réalisation de l'invention, les routes potentielles sont calculées en utilisant un algorithme de parcours de graphe, par exemple de type BFS ou DFS, tels que décrits dans le document "Introduction to Algorithms, Second Edition", par Thomas H. Cormen, Charles E. Leiserson, Ronald L. Rivest, Clifford Stein, ISBN: 0262032937.

Dans un mode particulier de réalisation de l'invention, on diffuse, au cours de l'étape de recherche, une requête de recherche sur les routes potentielles, conformément à un mécanisme de type "source routing", de sorte que la requête contient, lorsqu'elle atteint le noeud destinataire, l'ensemble des références des noeuds de la route.

On rappelle que dans un mécanisme de type "source routing", on insère, dans les requêtes, l'identité des noeuds au fur et à mesure de leur progression dans le réseau.

Dans un mode particulier de réalisation de l'invention, le protocole de routage proactif établit la table de routage en prenant en compte au moins une deuxième contrainte différente de la première contrainte.

Afin de limiter la complexité du protocole de routage proactif, on se limitera préférentiellement à trois deuxièmes contraintes.

Dans ce mode particulier de réalisation de l'invention, le protocole de routage réactif sera mis en oeuvre, lorsque l'on recherche une route devant satisfaire au moins la première contrainte.

Dans un mode particulier de réalisation de l'invention, les deuxièmes contraintes prises en compte pour la construction des tables de routage par le protocole proactif sont des métriques de qualité de service, et par exemple les métriques suivantes :

- délai ;
- taux de perte ; et
- bande passante disponible.

L'invention trouve une utilisation privilégiée lorsque les noeuds du réseau sont constitués par des équipements de télécommunication mobiles.

Dans ce mode de réalisation, la première contrainte qui déclenche la mise en oeuvre du protocole réactif pourra par exemple être une contrainte satisfaite lorsque la somme des énergies disponibles (autrement dit l'autonomie restante) dans les équipements mobiles constituant une route est supérieure à un niveau minimal d'énergie prédéterminé.

Dans un mode particulier de réalisation de l'invention, le protocole de routage réactif permet d'identifier plusieurs routes possibles entre le noeud source et le noeud destinataire. On met alors en oeuvre une étape de sélection utilisant une métrique prenant en compte le nombre de sauts entre le noeud source et le noeud destinataire pour sélectionner la meilleure route parmi ces différentes routes.

Dans un mode particulier de réalisation, les différentes étapes du procédé d'identification de route sont déterminées par des instructions de programmes d'ordinateurs.

Dans ce document, le terme "ordinateur" est à prendre au sens large. Il vise tout dispositif de traitement de données et notamment un téléphone cellulaire.

En conséquence, l'invention vise aussi un programme d'ordinateur sur un support d'informations, ce programme étant susceptible d'être mis en oeuvre dans un dispositif d'identification de route ou plus généralement dans un ordinateur, ce programme comportant des instructions adaptées à la mise en oeuvre des étapes d'un procédé d'identification de route tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise aussi un réseau de télécommunication comportant une pluralité de noeuds adaptés à mettre en oeuvre un procédé d'identification de route tel que mentionné ci-dessus.

L'invention vise aussi un équipement formant un noeud d'un réseau de télécommunication comprenant un dispositif d'identification de route tel que mentionné ci-dessus

Brève description des dessins

D'autres caractéristiques et avantages de la présente invention ressortiront de la description faite ci-dessous, en référence aux annexes et aux dessins qui en illustrent un exemple de réalisation dépourvu de tout caractère limitatif et dans lesquels :

- l'annexe 1 est un listing, en pseudo-code, d'un programme informatique permettant de mettre en oeuvre l'algorithme connu de Dijkstra ;
- les annexes 2A et 2B sont des listings en pseudo-code d'un algorithme de Dijkstra modifié utilisé dans un mode particulier de réalisation de l'invention ;
- la figure 1 représente un réseau ad hoc dans lequel l'invention peut être utilisée ;
- la figure 2 représente une table de routage d'un noeud de ce réseau ;
- la figure 3 représente, de façon schématique, un dispositif d'identification de route conforme à l'invention dans un mode particulier de réalisation ; et
- la figure 4 représente, sous forme d'organigramme, les principales étapes d'un procédé d'identification de route conforme à l'invention dans un mode particulier de réalisation.

Description détaillée d'un mode de réalisation

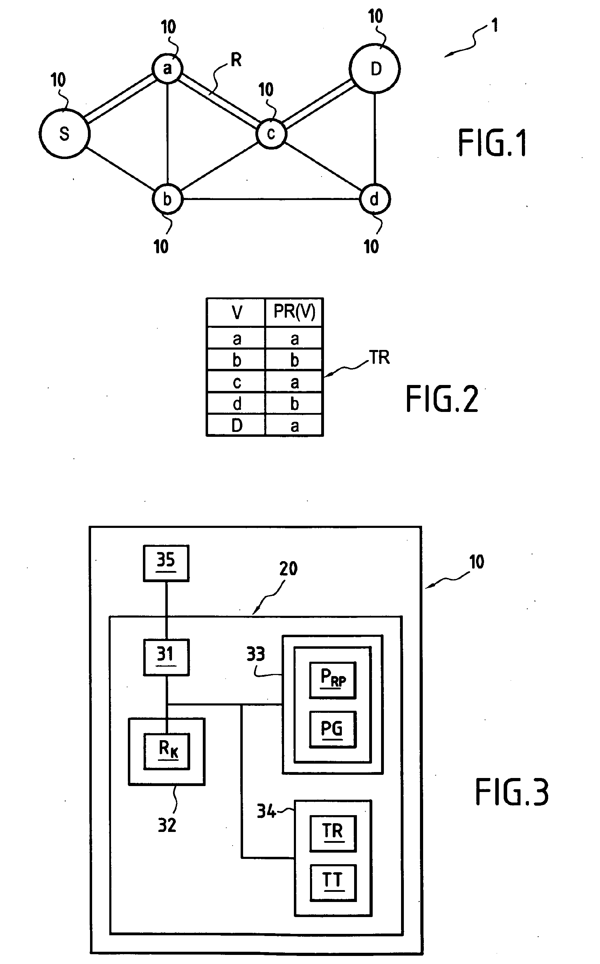

La figure 1 représente un réseau ad hoc 1 dans lequel peut être utilisée l'invention.

Ce réseau est constitué par un ensemble de noeuds 10.

Ces noeuds sont identiques ou non. Ils peuvent être par exemple tous constitués par des équipements mobiles.

Dans la suite de ce document, on désignera :

- par S un noeud source ;
- par D un noeud destinataire ; et
- par les lettres minuscules a, b, c, d des noeuds intermédiaires pouvant être utilisés pour acheminer un paquet entre le noeud source S et le noeud destinataire D.

Un trait simple ou un double trait entre deux noeuds 10 représente le fait que ces deux noeuds sont voisins et qu'une communication radio peut être établie entre ces noeuds pour l'acheminement d'un paquet.

On va maintenant décrire, en référence à l'annexe 1, l'algorithme de Dijkstra, cet algorithme de plus court chemin pouvant être utilisé par un protocole de routage proactif pour établir, à partir d'une table de topologie TT, une table de routage TR du réseau ad hoc 1.

On rappelle à cet effet :

- qu'une table de topologie TT est une matrice qui représente les noeuds du réseau et les liens existants entre ces noeuds. Elle peut être construite grâce à l'échange périodique de message entre les noeuds, comme c'est le cas pour le protocole proactif OLSR ("Optimized Link State Routing" ; et
- qu'une table de routage TR, au niveau d'un noeud S, contient, pour chaque destination D dans le réseau, l'adresse d'un élément E qui est le prochain noeud de routage voisin de S à un saut, pour atteindre la destination D.

L'algorithme de Dijkstra permet de trouver le plus court chemin (selon des métriques prédéfinies : le nombre de sauts par exemple) entre un noeud d'origine donné *s* et n'importe quel noeud *v* du graphe G représentatif du réseau ad hoc 1.

L'algorithme de Dijkstra emploie la technique de relâchement.

Plus précisément, pour chaque noeud *v* on gère un attribut *d[v]* qui est un majorant d'un plus court chemin entre l'origine *s* et *v*.

*d[v]* est appelé "estimation du plus court chemin".

Les estimations et les prédécesseurs ($\pi$[.]) sont initialisés par la procédure *"Initialisation"* de l'annexe 1.

La procédure *"Relax"* est utilisée pour le processus de relâchement.

La table de routage TR obtenue par l'algorithme de Dijkstra est donnée à la figure 2.

Selon les notations de l'annexe 1, l'ensemble E contient la liste des noeuds formant le plus court chemin (en termes de métrique de routage choisie) entre la source s et la destination d. L'élément de E, qui est voisin de s à un saut, est le "prochain routeur" dans la table de routage TR pour atteindre le noeud destinataire d.

La table de routage TR décrite à la figure 2 est celle de la source S.

Elle comporte une première colonne dans laquelle apparaissent tous les noeuds a, b, c, d, D du réseau ad hoc 1 et une deuxième colonne dans laquelle est mémorisé, en vis-à-vis d'un noeud *v,* le prochain routeur PR(V) suivant S dans le plus court chemin vers *v*.

Sur la figure 1, on a représenté en double trait le plus court chemin R entre le noeud source S et le noeud destinataire D.

Ainsi, pour atteindre D à partir de S, le plus court chemin passe tout d'abord par le noeud intermédiaire a, ce qui explique que le noeud intermédiaire a est associé au noeud destinataire D dans la table de routage TR.

L'algorithme de Dijkstra décrit précédemment en référence à l'annexe 1 utilise une métrique représentative du nombre de sauts entre le noeud source S et le noeud destinataire D.

Nous allons maintenant décrire en référence aux annexes 2A et 2B un algorithme de Dijkstra modifié *(Dijkstra-Modifié)* utilisant, à la place de la métrique "nombre de sauts", une métrique composée de trois métriques primaires de qualité de service, à savoir :

- le délai (contrainte $C_1$),
- le taux de perte (contrainte $C_2$), et
- la bande passante disponible (contrainte $C_3$) sur le réseau ad hoc 1.

Le taux de perte étant une métrique multiplicative, on peut la transformer en une métrique additive comme décrit ci-dessous :

Si $p_{ij}$ est la probabilité de perte sur le lien (i, j), la probabilité de succès sur le lien (i, j) serait alors $q_{ij} = 1 - p_{ij}$. Ainsi, sur le chemin P de la source *i* vers la destination *t*: la probabilité de perte serait :

$$p_{perte}(P) = 1 - ((q_{ij})(q_{jk})...(q_{lt})).$$

Supposons que la probabilité-logarithmique de succès du lien (i, j), $pls_{ij}$, soit définie par : $pls_{ij} = -\log q_{ij}$. Alors la probabilité-logarithmique de succès sur le chemin P est :

$$pls(P) = -\sum_{(i,j)\in P} \log q_{ij}$$

Si on suppose que la probabilité de perte sur une route donnée, R, est inférieure à 0.9. On a alors $0.1 < pls(R) < 1$.

On suppose aussi que le délai prend des valeurs entières. Si l'unité milliseconde donne des valeurs réelles, on utilise alors l'unité microseconde pour le calcul des délais.

Une méthode pour rechercher le plus court chemin vérifiant les 3 trois métriques de QoS, si un tel chemin existe, va maintenant être décrite.

Soit $G = (N, A)$ le graphe représentant le réseau ad hoc 1, comportant N noeuds et A arcs (liens). A chaque arc sont affectées deux valeurs réelles :

$b_{ij}$ la bande passante disponible ainsi que la métrique composée ; et

$m_{ij} = pls_{ij} + d_{ij}$, où $d_{ij}$ représente le délai sur le lien (i, j). Soit les quatre constantes suivantes :

■ B : la bande passante minimale ;

■ D : le délai maximum ;

■ P : la probabilité logarithmique de succès (pls) maximale ;

■ M = D + P : la valeur maximale de la métrique composée.

Soit une route $R = (s, k, i, ..., r, d)$. La bande passante disponible sur R est $\min[b_{sk}, b_{ki}, ...., b_{rd}]$, et la longueur de R est $m_{sk} + m_{ki} + ... + m_{rd}$.

Le problème est de trouver une route, R, telle que la bande passante disponible sur R soit supérieure à B, et la longueur de R soit inférieure à M.

Soit une route R du sommet s vers le sommet d comportant $y$ sauts, si $pls_{ij} < P/y$ pour chaque lien (i,j) appartenant à la route R alors $pls(R) < P$. Néanmoins, la valeur de $y$ est inconnue durant la recherche de la route. L'idée est alors de restreindre $pls_{ij}$ à P/C, où C est la longueur de la route la plus courte entre s et d (en termes de nombre de sauts) (ce qui est une hypothèse optimiste).

Deux compteurs sont maintenus :

■ $NS_i$ : représente la différence entre C et la longueur du chemin parcouru (en termes de nombre de sauts) de la source jusqu'au noeud i.

■ $RP_i$ : représente la différence entre P et la valeur actuelle de la probabilité logarithmique de succès de la source jusqu'au noeud i.

Ainsi, la valeur maximale de probabilité logarithmique de succès qui peut être rajoutée à chaque étape sera $RP_i/NC_i$ au lieu de P/ C.

L'algorithme Dijkstra_Modifié des annexes 2A et 2B résout le problème cité plus haut en supposant que le sommet s soit le noeud source et que le sommet d soit le noeud destination.

Dans cette annexe, nous utilisons les variables et notations suivantes :

- $b_{ij}$ : bande passante disponible sur le lien (i,j)

- $m_{ij}$ : cout du lien (i,j). ($m_{ij} = pls_{ij} + d_{ij}$, où : $d_{ij}$ : délai sur le lien (i,j) et $pls_{ij}$ est la probabilité logarithmique de succès sur le lien (i,j))

- $\pi[i]$ : prédécesseur du noeud i

- $\lfloor x \rfloor$ : partie entière de x

- $M_i$ : la longueur de la route en construction.

Nous allons maintenant décrire en référence à la figure 3 un dispositif 20 d'identification conforme à l'invention.

Dans l'exemple décrit ici, ce dispositif 20 est incorporé dans un téléphone portable 10 constituant un noeud du réseau ad hoc 1.

Dans l'exemple décrit ici, le dispositif 20 d'identification selon l'invention comporte des moyens classiques de traitement d'un ordinateur, à savoir un processeur 31, une mémoire morte de type ROM 33 et une mémoire vive de type RAM 312.

Dans l'exemple décrit ici, un programme d'ordinateur PG conforme à l'invention est enregistré dans la mémoire morte 33.

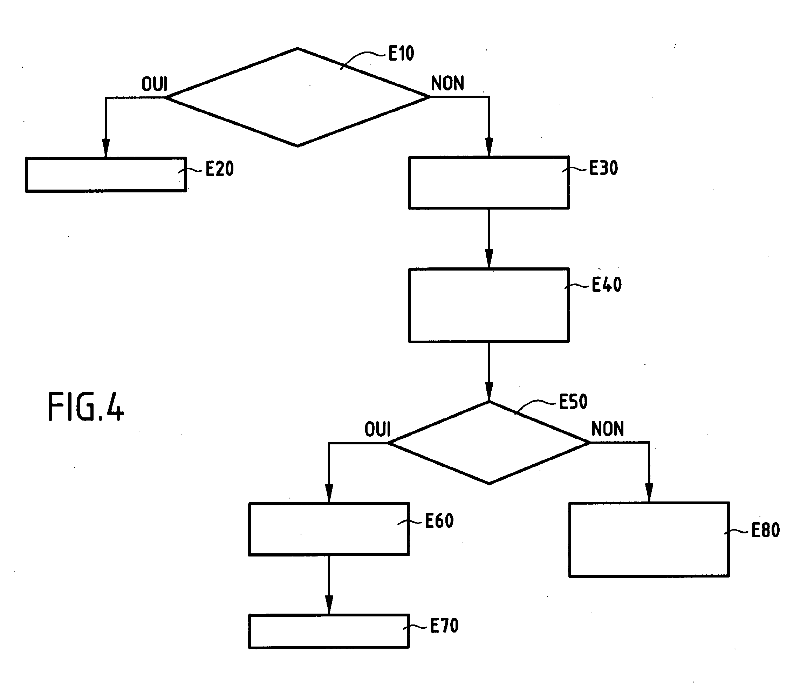

Ce programme d'ordinateur comprend des instructions pour l'exécution des étapes du procédé d'identification de route conforme à l'invention dont l'organigramme est représenté à la figure 4.

Dans l'exemple de réalisation décrit ici, le programme informatique PG comporte un module $P_{RP}$ adapté à mettre en oeuvre le protocole de routage proactif $P_{RP}$ basé sur l'algorithme de Dijkstra modifié décrit précédemment en référence aux annexes 2A et 2B.

En particulier, le module de routage proactif $P_{RP}$ est apte à établir et à maintenir une table de routage TR et une table de topologie TT qui, dans l'exemple décrit ici, sont mémorisées dans une mémoire réinscriptible non volatile 34 du dispositif d'identification 20 conforme à l'invention.

Conformément aux notations de l'annexe 1B, l'ensemble L contient la liste des noeuds formant le plus court chemin entre la source s et la destination d. L'élément de L, qui est voisin de s à un saut, est le "prochain routeur" dans la table de routage TR pour atteindre le noeud destinataire d.

Nous allons maintenant décrire, en référence à la figure 4, les principales étapes du procédé d'identification conforme à l'invention dans un mode particulier de réalisation.

Nous nous placerons dans le contexte dans lequel les tables de routage TR et de topologie TT sont déjà établies par le module de routage proactif $P_{RP}$.

Ainsi, la table de topologie TT représente une topologie du réseau ad hoc prenant en compte les trois contraintes constituées par les métriques délai (Ci), taux de perte ($C_2$) et bande passante disponible ($C_3$).

Nous supposerons dans cet exemple qu'une nouvelle connexion est établie entre le noeud source S et le noeud destinataire D demandant qu'une quatrième contrainte $C_4$ soit satisfaite.

Dans l'exemple décrit ici, cette contrainte $C_4$ est satisfaite lorsque la somme des énergies disponibles $e_i$ des équipements mobiles 10 constituant la route R entre le noeud source S et le noeud destinataire D est supérieure à un niveau minimal E d'énergie prédéterminé.

Au cours d'un premier test E10 du procédé, on vérifie si la route correspondant au plus court chemin défini par la table de routage TR, entre le noeud source S et le noeud destinataire D, vérifie cette quatrième contrainte.

Le noeud source S envoie, par exemple en mode source-routing, une requête sur la route définie dans la table de routage TR. Conformément aux mécanismes connus de source-routing, on vérifie au fur et à mesure que cette requête traverse les noeuds intermédiaires vers le noeud destinataire D, si cette route vérifie la quatrième contrainte $C_4$.

Une fois le noeud destinataire atteint, on vérifie si la quatrième contrainte est atteinte.

Dans l'exemple décrit ici, ceci revient à vérifier si la somme des énergies disponibles dans les téléphones mobiles S, a, c et D est supérieure à l'énergie minimale E.

Si tel est le cas, une réponse positive est renvoyée vers le noeud source S et le résultat du test E10 est positif. Ce test est alors suivi par une étape E20 au cours de laquelle on établit une connexion entre le noeud source S et le noeud destinataire D en suivant la route R définie par la table de routage TR.

Si tel n'est pas le cas, une réponse négative est renvoyée vers le noeud source S et le résultat du test E10 est négatif. On déclenche alors un algorithme de routage réactif pour identifier de nouvelles routes permettant de satisfaire toutes les contraintes.

A cet effet, le noeud S détermine, au cours d'une étape E30, un certain nombre de routes potentielles $R_k$ à partir de la table de topologie TT maintenue à jour par le module de routage proactif $P_{RP}$ en utilisant un algorithme de parcours de graphe.

On peut utiliser des algorithmes de parcours de graphe de type BFS (pour " Breadth First Search") ou DFS (pour "Depth First Search"), tels que décrits dans le document "Introduction to Algorithms, Second Edition", par Thomas H. Cormen, Charles E. Leiserson, Ronald L. Rivest, Clifford Stein, ISBN: 0262032937.

Dans l'exemple décrit ici, ces routes potentielles $R_k$ sont mémorisées dans la mémoire vive 32 du dispositif d'identification conforme à l'invention.

Cette étape E30 de sélection des routes potentielles $R_k$ est suivie par une étape E40 au cours de laquelle le noeud source S envoie, par example en source-routing, une requête sur chacune des routes $R_k$.

Conformément aux mécanismes connus de source-routing, on vérifie au fur et à mesure que ces requêtes traversent les noeuds intermédiaires vers le noeud destinataire D, si cette route vérifie la quatrième contrainte $C_4$.

Typiquement, puisqu'il s'agit d'une contrainte additive, on établit le cumul des énergies $e_i$ disponibles dans tous les noeuds traversés par la requête.

Une fois le noeud destinataire D atteint, on vérifie si l'énergie de ce chemin est supérieure à la valeur minimale requise E.

Si tel est le cas, une réponse positive est renvoyée vers le noeud source S.

Dans le cas contraire, une réponse négative est renvoyée vers le noeud source S.

Cette étape E40 de diffusion de la requête est suivie par une étape E50 au cours de laquelle le noeud source S vérifie si au moins une route potentielle satisfait la quatrième contrainte en fonction de la ou des réponse(s) reçue(s) à l'étape précédente.

Si tel est le cas, le résultat du test E50 est positif. Ce test est alors suivi par une étape E60 au cours de laquelle on choisit, parmi toutes les routes satisfaisantes, celle qui comporte le moins de sauts.

Puis, au cours d'une étape E70, on établit la connexion entre le noeud source S et le noeud destinataire D suivant cette route.

Si aucune des routes potentielles $R_k$ ne permet de satisfaire la quatrième contrainte, le résultat du test E50 est négatif.

Ce test est alors suivi par une étape E80 au cours de laquelle on diffuse une requête sur tout le réseau ad hoc 1 pour rechercher les routes qui satisfont à la contrainte $C_4$.

Dans l'exemple décrit précédemment, l'algorithme de routage réactif est mis en oeuvre pour rechercher une route lorsqu'une nouvelle contrainte (en l'occurrence la quatrième contrainte) doit être prise en compte.

Dans d'autres modes de réalisation de l'invention, le routage réactif peut être mis en oeuvre à l'initiative de l'application de routage, dès lors que l'algorithme de routage proactif ne constitue pas ou plus une solution satisfaisante pour identifier les routes, même si les contraintes prises en compte pour le calcul de ces routes sont inchangées.

ANNEXE 1

```
Initialisation (G, s)
        DEBUT
        pour chaque nœud v
            faire d[v] := ∞
                    π[v] := NIL
        d[s] := 0
        FIN


Relax (u, v)
        DEBUT
        si d[v] > d[u] + w(u, v)
            alors d[v] := d[u] + w(u, v)
                    π[v] := u
        FIN


Dijkstra (G, w, s)
        DEBUT
        Initialisation (G, s)
        E := Ø
        F := S[G]
        tant que F ≠ Ø
            faire u := Extract-Min(F)
                    E := E U {u}
                    pour chaque sommet v adjacent à u
                        faire Relax(u, v)
        FIN
```

ANNEXE 2A

*Initialisation_Modifié (N, A)*

DEBUT

Dijkstra (N, A) ;

pour chaque sommet i adjacent à j faire

    si ($b_{ij}$ < B) alors

        $m_{ij} = \infty$;

    finsi

fait

L = {(s, s)} ; $NC_s$ = C ; $RP_s$ = P.

pour chaque sommet i , i≠ s faire

    $M_i = m_{si}$ ; $\pi[i] = s$;

    si ($M_i == \infty$) alors

        $NC_i = C$;

        $RP_i = P$;

    sinon

        $NC_i = C - 1$;

        $RP_i = P - (m_{si} - \lfloor m_{si} \rfloor)$;

    finsi

FIN


*Relax_Modifié (N,L)*

DEBUT

pour chaque i ∉ L faire

    si (($M_k + m_{kj} < M_i$) ET ($m_{ki} - \lfloor m_{ki} \rfloor < RP_i/NC_i$)) alors

        $M_i = M_k + m_{ki}$ ;

        $\pi[i] = k$ ;

        $NC_i = NC_k - 1$;

        $RP_i = RP_k - \lfloor m_{ki} \rfloor$

        finsi

    fait

FIN


ANNEXE 2B

```
Dijkstra_Modifié(N,A)
DEBUT
Initialisation_Modifié (N, A)
F:=S[G]; /* F contient l'ensemble des sommets du graphe G */
tantque F≠ Ø
        Trouver k ∉L tel que (Mₖ = min_{i∉L} Mᵢ  ET Mᵢ - ⌊Mᵢ⌋ ≤ P)
                si Mₖ > M alors il n'y pas de chemin faisable. STOP.
        L := L∪{(k, π[k])};
        F :=F-{k} ;
        Si L contient la destinataire d alors la route a été trouvée. STOP
        Relax_Modifié (N, L);
fin tantque
FIN
```

## Revendications

1. Procédé d'identification d'au moins une route (R) satisfaisant au moins une première contrainte ($C_4$) entre un noeud source (S) et un noeud destinataire (D) dans un réseau de télécommunications, dans lequel une table de routage (TR) et une table de topologie (TT) étant établies par la mise en oeuvre d'un protocole proactif ($P_{RP}$), une route entre le noeud source S et le noeud destinataire D est déterminée à partir de la table de routage (TR), **caractérisé en ce que** le procédé comporte :

   - une étape (E10) de test, dans laquelle on vérifie si la route déterminée à partir de la table de routage (TR) vérifie ladite au moins une première contrainte ; et en cas d'échec (E20) de ladite étape de test (E10) :
   - une étape (E30) de sélection d'un nombre prédéterminé (k) de routes potentielles ($R_k$) à partir de la table de topologie (TT) ; et
   - une étape (E40) de recherche d'au moins une route parmi lesdites routes potentielles ($R_k$) satisfaisant ladite au moins une première contrainte.

2. Procédé d'identification selon la revendication 1, **caractérisé en ce que** lesdites routes potentielles ($R_k$) sont sélectionnées à partir de la table de topologie (TT) en utilisant un algorithme de parcours de graphe.

3. Procédé d'identification selon l'une quelconque des revendications 1 à 2, **caractérisé en ce qu'**on diffuse, au cours de ladite étape (E40) de recherche, une requête de recherche sur lesdites routes potentielles ($R_k$), conformément à un mécanisme de type "source routing", de sorte que la requête contient, lorsqu'elle atteint le noeud destinataire, l'ensemble des références des noeuds de la route.

4. Procédé d'identification selon l'une quelconque des revendications 1 à 3, **caractérisé en ce que** ledit protocole de routage proactif ($P_{RP}$) établit ladite table de routage (TR) en prenant en compte au moins une deuxième contrainte ($C_1$, $C_2$, $C_3$) différente de ladite au moins une première contrainte ($C_4$).

5. Procédé d'identification selon la revendication 4, **caractérisé en ce que** ladite au moins une deuxième contrainte ($C_1$, $C_2$, $C_3$) est une métrique de qualité de service.

6. Procédé d'identification selon la revendication 5 dans lequel on utilise trois deuxièmes contraintes constituées par les métriques suivantes:

- délai ($C_1$) ;
- taux de perte ($C_2$) ; et
- bande passante disponible ($C_3$).

**7.** Procédé d'identification selon l'une quelconque des revendications 1 à 6 dans lequel les noeuds du réseau sont constitués par des équipements de télécommunication mobiles (10), **caractérisé en ce que** ladite première contrainte ($C_4$) est satisfaite lorsque la somme des énergies disponibles ($e_i$) des noeuds (10) constituant une route (R) est supérieure à un niveau minimal (E) d'énergie prédéterminé.

**8.** Procédé d'identification selon l'une quelconque des revendications 1 à 7, **caractérisé en ce qu'**il comporte une étape (E60) de sélection d'une seule route parmi lesdites au moins une route (R) trouvées lors de l'étape (E40) de recherche, ladite étape (E60) de sélection utilisant une métrique prenant en compte un nombre de sauts entre ledit noeud source (S) et ledit noeud destinataire (D).

**9.** Dispositif (20) d'identification d'au moins une route (R) satisfaisant au moins une première contrainte ($C_4$) entre un noeud source (S) et un noeud destinataire (D) dans un réseau de télécommunications, ce dispositif (20) comportant :

- des moyens (31, 32, 33) de mise en oeuvre d'un protocole de routage proactif ($P_{RP}$) apte à établir une table de routage (TR) et une table de topologie (TT) ; ce dispositif (20) étant **caractérisé en ce qu'**il comporte en outre :
- des moyens (31, 32, 33) de test, agencés pour vérifier si une route entre le noeud source S et le noeud destinataire D déterminée à partir de la table de routage (TR) vérifie ladite au moins une première contrainte ;
- des moyens (31, 32, 33) de sélection d'un nombre prédéterminé (k) de routes potentielles ($R_k$) à partir de ladite table de topologie (TT) ; et
- des moyens (31, 32, 33) de recherche, agencés pour rechercher au moins une route (R) parmi lesdites routes potentielles ($R_k$) satisfaisant ladite au moins une première contrainte.

**10.** Programme d'ordinateur (PG) comportant des instructions pour l'exécution des étapes du procédé d'identification de route selon l'une quelconque des revendications 1 à 8 lorsque ledit programme est exécuté par un ordinateur (10).

**11.** Support d'enregistrement (33) lisible par un ordinateur (10) sur lequel est enregistré un programme d'ordinateur (PG) comprenant des instructions pour l'exécution des étapes du procédé d'identification de route selon l'une quelconque des revendications 1 à 8.

**12.** Réseau de télécommunications (1) comportant une pluralité de noeuds (10) adaptés à mettre en oeuvre le procédé d'identification de route selon l'une quelconque des revendications 1 à 8.

**13.** Equipement formant noeud d'un réseau de télécommunications, **caractérisé en ce qu'**il comprend un dispositif d'identification de route selon la revendication 9.

**Claims**

**1.** Method for identifying at least one route (R) satisfying at least one first constraint ($C_4$) between a source node (S) and a destination node (D) in a telecommunications network, in which a routing table (TR) and a topology table (TT) being established by the implementation of a proactive protocol ($P_{RP}$), a route between the source node S and the destination node D is determined on the basis of the routing table (TR), **characterized in that** the method comprises:

- a test step (E10), in which it is verified whether the route determined on the basis of the routing table (TR) satisfies the said at least one first constraint; and in the case of failure (E20) of the said test step (E10):
- a step (E30) of selecting a predetermined number (k) of potential routes ($R_k$) on the basis of the topology table (TT); and
- a step (E40) of searching for at least one route from among the said potential routes ($R_k$) satisfying the said at least one first constraint.

**2.** Identification method according to Claim 1, **characterized in that** the said potential routes ($R_k$) are selected on the basis of the topology table (TT) by using a graph traversal algorithm.

**3.** Identification method according to either of Claims 1 and 2, **characterized in that**, in the course of the said search step (E40), a request to search is broadcast on the said potential routes ($R_k$) in accordance with a mechanism of "source routing" type, so that the request contains, when it reaches the destination node, the set of references of the nodes of the route.

4. Identification method according to any one of Claims 1 to 3, **characterized in that** the said proactive routing protocol ($P_{RP}$) establishes the said routing table (TR) by taking into account at least one second constraint ($C_1$, $C_2$, $C_3$) different from the said at least one first constraint ($C_4$).

5. Identification method according to Claim 4, **characterized in that** the said at least one second constraint ($C_1$, $C_2$, $C_3$) is a metric of quality of service.

6. Identification method according to Claim 5 in which three second constraints consisting of the following metrics are used:

    - delay ($C_1$) ;
    - loss rate ($C_2$) ; and
    - available bandwidth ($C_3$).

7. Identification method according to any one of Claims 1 to 6 in which the nodes of the network consist of items of mobile telecommunications equipment (10), **characterized in that** the said first constraint ($C_4$) is satisfied when the sum of the available energies ($e_i$) of the nodes (10) constituting a route (R) is greater than a predetermined minimum energy level (E).

8. Identification method according to any one of Claims 1 to 7, **characterized in that** it comprises a step (E60) of selecting a single route from among the said at least one route (R) found during the search step (E40), the said selection step (E60) using a metric taking into account a number of hops between the said source node (S) and the said destination node (D).

9. Device (20) for identifying at least one route (R) satisfying at least one first constraint ($C_4$) between a source node (S) and a destination node (D) in a telecommunications network, this device (20) comprising:

    - means (31, 32, 33) for implementing a proactive routing protocol ($P_{RP}$) able to establish a routing table (TR) and a topology table (TT); this device (20) being **characterized in that** it furthermore comprises:
    - test means (31, 32, 33), designed to verify whether a route, determined on the basis of the routing table (TR), between the source node S and the destination node D satisfies the said at least one first constraint;
    - means (31, 32, 33) for selecting a predetermined number (k) of potential routes ($R_k$) on the basis of the said topology table (TT) ; and
    - search means (31, 32, 33), designed to search for at least one route (R) from among the said potential routes ($R_k$) satisfying the said at least one first constraint.

10. Computer program (PG) comprising instructions for the execution of the steps of the route identification method according to any one of Claims 1 to 8 when the said program is executed by a computer (10).

11. Recording medium (33) readable by a computer (10) on which is recorded a computer program (PG) comprising instructions for the execution of the steps of the route identification method according to any one of Claims 1 to 8.

12. Telecommunications network (1) comprising a plurality of nodes (10) which are suitable for implementing the route identification method according to any one of Claims 1 to 8.

13. Item of equipment forming a node of a telecommunications network, **characterized in that** it comprises a route identification device according to Claim 9.

**Patentansprüche**

1. Verfahren zur Identifikation mindestens einer mindestens eine erste Bedingung ($C_4$) erfüllenden Route (R) zwischen einem Quellenknoten (S) und einem Zielknoten (D) in einem Telekommunikationsnetzwerk, bei dem, wenn eine Routing-Tabelle (TR) und eine Topologie-Tabelle (TT) durch die Anwendung eines proaktiven Protokolls ($P_{RP}$)

erstellt wurden, eine Route zwischen dem Quellenknoten S und dem Zielknoten D ausgehend von der Routing-Tabelle (TR) bestimmt wird, **dadurch gekennzeichnet, dass** das Verfahren aufweist :

- einen Testschritt (E10), in dem überprüft wird, ob die ausgehend von der Routing-Tabelle (TR) bestimmte Route die mindestens eine erste Bedingung erfüllt; und bei einem Scheitern (E20) des Testschritts (E10):
- einen Schritt (E30) der Auswahl einer vorbestimmten Anzahl (k) von potentiellen Routen ($R_k$) ausgehend von der Topologie-Tabelle (TT); und
- einen Schritt (E40) der Suche nach mindestens einer Route unter den potentiellen Routen ($R_k$), die die mindestens eine erste Bedingung erfüllt.

2. Identifikationsverfahren nach Anspruch 1, **dadurch gekennzeichnet, dass** die potentiellen Routen ($R_k$) ausgehend von der Topologie-Tabelle (TT) unter Verwendung eines Graphdurchlauf-Algorithmus ausgewählt werden.

3. Identifikationsverfahren nach einem der Ansprüche 1 bis 2, **dadurch gekennzeichnet, dass** während des Suchschritts (E40) eine Suchanfrage über die potentiellen Routen ($R_k$) gemäß einem Mechanismus des Typs "source routing" ausgesendet wird, so dass die Anfrage, wenn sie den Zielknoten erreicht, die Gesamtheit der Referenzen der Knoten der Route enthält.

4. Identifikationsverfahren nach einem der Ansprüche 1 bis 3, **dadurch gekennzeichnet, dass** das proaktive Routing-Protokoll ($P_{RP}$) die Routing-Tabelle (TR) erstellt, indem es mindestens eine zweite Bedingung ($C_1$, $C_2$, $C_3$) berücksichtigt, die sich von der mindestens einen ersten Bedingung ($C_4$) unterscheidet.

5. Identifikationsverfahren nach Anspruch 4, **dadurch gekennzeichnet, dass** die mindestens eine zweite Bedingung ($C_1$, $C_2$, $C_3$) eine Dienstqualitätsmetrik ist.

6. Identifikationsverfahren nach Anspruch 5, bei dem drei zweite Bedingungen verwendet werden, die aus den folgenden Metriken bestehen:

- Verzögerung ($C_1$) ;
- Verlustrate ($C_2$); und
- verfügbares Durchlassband ($C_3$).

7. Identifikationsverfahren nach einem der Ansprüche 1 bis 6, bei dem die Knoten des Netzwerks aus mobilem Telekommunikationsausrüstungen (10) bestehen, **dadurch gekennzeichnet, dass** die erste Bedingung ($C_4$) erfüllt ist, wenn die Summe der verfügbaren Energien ($e_i$) der eine Route (R) bildenden Knoten (10) höher als ein vorbestimmtes minimales Energieniveau (E) ist.

8. Identifikationsverfahren nach einem der Ansprüche 1 bis 7, **dadurch gekennzeichnet, dass** es einen Schritt (E60) der Auswahl eimer einzigen Route unter den mindestens einen Routen (R) aufweist, die im Suchschritt (E40) gefunden wurden, wobei der Auswahlschritt (E60) eine Metrik verwendet, die eine Anzahl von Sprüngen zwischen dem Quellenknoten (S) und dem Zielknoten (D) berücksichtigt.

9. Vorrichtung (20) zur Identifikation mindestens einer mindestens eine erste Bedingung ($C_4$) erfüllenden Route (R) zwischen einem Quellenknoten (S) und einem Zielknoten (D) in einem Telekommunikationsnetzwerk, wobei diese Vorrichtung (20) aufweist:

- Einrichtungen (31, 32, 33) zur Anwendung eines proaktiven Routing-Protokolls ($P_{RP}$), das eine Routing-Tabelle (TR) und eine Topologie-Tabelle (TT) erstellen kann;
wobei diese Vorrichtung (20) **dadurch gekennzeichnet ist, dass** sie weiter aufweist:
- Testeinrichtungen (31, 32, 33), die eingerichtet sind, um zu überprüfen, ob eine Route zwischen dem Quellenknoten S und dem Zielknoten D, die ausgehend von der Routing-Tabelle (TR) bestimmt wird, die mindestens eine erste Bedingung erfüllt;
- Einrichtungen (31, 32, 33) zur Auswahl einer vorbestimmtem Anzahl (k) von potentiellen Routen ($R_k$) ausgehend von der Topologie-Tabelle (TT); und
- Sucheinrichtungen (31, 32, 33), die eingerichtet sind, um mindestens eine Route (R) unter den potentiellen Routen ($R_k$) zu suchen, die die mindestens eine erste Bedingung erfüllt.

10. Computerprogramm (PG), das Anweisungen für die Ausführung der Schritte des Identifikationsverfahrens nach einem der Ansprüche 1 bis 8 aufweist, wenn das Programm von einem Computer (10) ausgeführt wird.

11. Aufzeichnungsträger (33), der von einem Computer (10) lesbar ist, auf dem ein Computerprogramm (PG) aufgezeichnet ist, das Anweisungen für die Ausführung der Schritte des Routen-Identifikationsverfahrens nach einem der Ansprüche 1 bis 8 enthält.

12. Telekommunikationsnetzwerk (1), das eine Vielzahl von Knoten (10) aufweist, die geeignet sind, um das Routen-Identifikationsverfahren nach einem der Ansprüche 1 bis 8 auszuführen.

13. Ausrüstung, die einen Knoten eines Telekommunikationsnetzwerks bildet, **dadurch gekennzeichnet, dass** sie eine Routen-Identifikationsvorrichtung nach Anspruch 9 enthält.

FIG.1

| V | PR(V) |
|---|-------|
| a | a |
| b | b |
| c | a |
| d | b |
| D | a |

FIG.2

FIG.3

FIG.4

**RÉFÉRENCES CITÉES DANS LA DESCRIPTION**

**Documents brevets cités dans la description**

- US 6304556 B1

**Littérature non-brevet citée dans la description**

- **Thomas H. Cormen ; Charles E. Leiserson ; Ronald L. Rivest ; Clifford Stein.** Introduction to Algorithms